# EUROPÄISCHE PATENTANMELDUNG

(11) **EP 2 157 001 A1**
(43) Veröffentlichungstag der Anmeldung: **24.02.2010**
(21) Anmeldenummer: 09466014.9
(22) Anmeldetag: 19.08.2009
(51) Int. Cl.: B60T 5/00

(54) **Variabler Kühlungskanal**

(30) Priorität: 21.08.2008 CZ 20080505
(71) Anmelder: Skoda Auto, 29360 Mladá Boleslav (CZ)
(72) Erfinder: Hrdlicka, Martin, Dr. Ing., 29301 Mladá Boleslav (CZ)

(57) **Zusammenfassung**

Ein variabler Kühlungskanal (1) wird durch einen Konfusor (2) gebildet, welcher mit einem Ende an einer Eintrittsöffnung (3) im Stoßfänger (4) der Fahrzeugkarosserie anliegt und dessen zweites Ende in ein Stoßband (5) übergeht. In das Stoßband (5) ist mit dem einen Ende die Austrittsdüse (7) eingesetzt, an deren zweitem Ende sich die Austrittsöffnung (8) befindet. Die gemeinsame Position des Stoßbands (5) und der Austrittsdüse (7) wird durch einen Bolzen (10) eingestellt, welcher durch eine Positionierungsöffnung (6) im Stoßband (5) und eine der gegenüber liegenden Öffnungen (9) in der Austrittsdüse (7) verläuft und durch ein Besfestigungsmittel (11), welches zum Beispiel durch eine Schelle (12) mit Schraube (13) gebildet wird.

## Beschreibung

### Technisches Gebiet

Die Erfindung betrifft einen variablen Kühlungskanal der Scheibenbremse eines Kraftfahrzeugs insbesondere eines Personenkraftwagens.

### Bisheriger Stand der Technik

Die Kraftfahrzeugbremse, vor allem der Vorderräder, wird thermisch stark belastet. Besonders in extremen Fällen, zum Beispiel bei längerer Bergabfahrt oder bei Sportwagen mit hoher Leistung, werden hohe Temperaturen der einzelnen Bremsenkomponenten erreicht, vor allem der Bremsscheibe und des Bremsventils. In diesem Fall genügt die gängige Kühlung mittels Luftverwirbelung in der Radfelge nicht und es müssen weitere zusätzliche Kühlungsmaßnahmen verwendet werden. Von diesen ist eine typische Maßnahme der Bremsenkühlungskanal, welcher eine Einlassöffnung im vorderen Teil der Karosserie hat, z.B. im Stoßfänger vom. Der Staudruck der Luft wird durch den Kühlungskanal von der Eingangsöffnung gezielt so weitergeleitet, dass dieser von der Eingangsöffnung des Kühlungskanals auf die Bremsscheibe, eventuell auf das Bremsventil geleitet. Dieser Kühlungskanal wird durch ein Teil oder mehrere Teile gebildet, zum Beispiel Kunststoffpressteile, die miteinander fest verbunden sind und dadurch die Luft dauerhaft an die festgelegte Stelle im Radkasten leiten. Diese Stelle ist so gewählt, dass an dieser Stelle über den überwiegenden Betriebszeitraum sich zum Beispiel das Bremsventil befindet, welches während der Kurvenfahrt und der Abfederung des Rads an dieser Stelle seitens der Position oszilliert.

In einigen Fällen hat jedoch diese gängige Lösung des Kühlungskanals beträchtlich Nachteile. Wenn am Fahrzeug die Fahrwerkhöhe verändert wird, dieses zum Beispiel bei einem schnellen Verstellen des Fahrwerks des Sportwagens während der Fahrt auf Asphalt hin zur Fahrt auf Schotter, kann die mittlere Position des Bremsventils sich seitens der Höhe verschieben und in diesem Fall muss das Bremsventil nicht gut durch den Kühlluftstrahl aus dem Kühlungskanal erfasst werden.

Ein weiteres typisches Beispiel ist die Veränderung der Fahrzeugbestückung mit einer anderen Bremsengröße, wo das Bremsventil anders befestigt ist, zum Beispiel näher an der Radmitte. Auch in diesem Fall kann es zu einer ähnlichen Wirkung kommen, d.h. der kühlende Luftfluss erreicht nicht die geforderte Stelle des Bremsventils und dadurch kommt es zur Absenkung der Kühlungswirksamkeit.

Die oben aufgeführten Mängel können weiter in dem Fall verstärkt werden, wenn beispielsweise durch die Gesetzgebung die Austrittsfläche aus dem Kühlungskanal begrenzt wird. In diesem Fall steht für die Zwecke der Kühlung ein verhältnismäßig subtiler Kühlungsfluss zur Verfügung, dessen geforderte Kühlungswirkung von der Genauigkeit und durch die Zielgenauigkeit auf das zu kühlende Objekt, zum Beispiel das Bremsventil, abhängig ist. In diesem Fall genügt auch eine sehr kleine Veränderung der oben aufgeführten Beispiele der Einstellung aus, dass die Kühlungswirkung bedeutend absinkt.

Ein weiterer Nachteil des bestehenden Stands ist der dauerhafte Luftstrom der Bremse und des Bremsventils auch in der Situation, in welcher die Wirksamkeit der zugeführten Stauluft nicht zweckmäßig ist. Ein typisches Beispiel ist die Fahrt im Regen auf einem schlammigen Weg. In diesem Fall, und insbesondere bei der Fahrt hinter einem anderen Fahrzeug, wird durch die Eintrittsöffnung des Kühlungskanals Schmutz, Schlamm und aufgewirbeltes Wasser aufgefangen und dieser Mix wird massiv auf die Funktionsfläche der Bremsscheibe geblasen, wodurch es zur Absenkung der Bremswirkung, als auch zu einem beschleunigten Reibungsverschleiss der Bremsscheibe und der Bremsbelege kommt. Diese Verunreinigungen können ebenfalls in die Mechanik des Bremsventils eindringen, was zu einem Stocken der Bremszylinder im Bremsventil und zu einer dauerhaften Radabbremsung führen kann.

### Darstellung der Erfindung

Die aufgeführten Unzulänglichkeiten beseitigt die technische Lösung laut der vorgelegten Erfindung. Ein variabler Kanal, welcher durch einen Konfusor angrenzend an eine Eintrittsöffnung im vorderen Stoßfänger gebildet wird, an welchen ein Stoßband und eine Austrittsdüse mit einer Austrittsöffnung anschließt, wobei die Austrittsdüse drehbar/einstellbar am Stoßband angebracht ist. Das Stoßband verfügt über eine einstellbare Öffnung und eine Austrittsdüse und ist mit gegenüber liegenden Öffnungen versehen. Durch die Düsenöffnung und der korrespondierenden Öffnung im Stoßband führt ein Bolzen. Die Eintrittsdüse ist mit einem Fixateur versehen, welcher durch die Schelle mit Schraube gebildet wird.

Der Vorteil der aufgeführten Zusammenstellung besteht in der optimalen Kühlung der Bremsscheibe, bzw. des Bremsventils bei den gegebenen Fahr- und Betriebsbedingungen.

### Figurenübersicht der Zeichnung

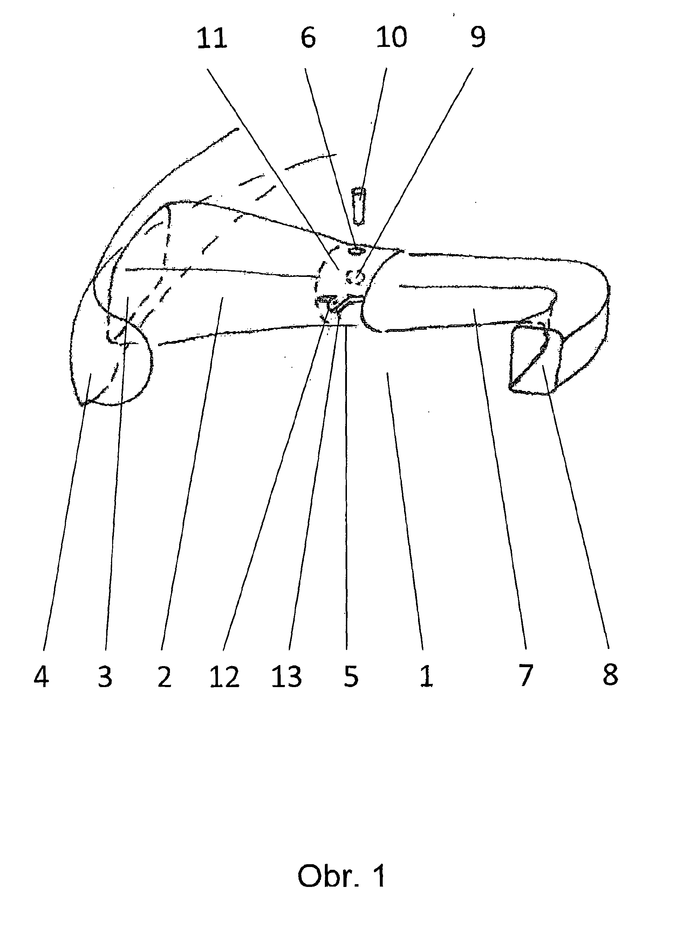

In der Fig. 1 befindet sich eine axonometrische Ansicht des variablen Kühlungskanals.

### Ausführungsbeispiel der Erfindung

Das Ausführungsbeispiel des variablen Kühlungskanals 1 befindet sich in der beigelegten Fig.1. Der variable Kühlungskanal 1 wird durch den Konfusor 2 gebildet, welcher mit einem Ende an die Eintrittsöffnung 3 im Stoßfänger 4 der Fahrzeugkarosserie anliegt und das zweite Ende in das Stoßband 5 übergeht, an dem sich eine Positionierungsöffnung 6 befindet. In das Stoßband 5 ist mit dem einen Ende die Austrittsdüse 7 eingesetzt, an deren zweitem Ende sich die Austrittsöffnung 8 befindet. Die Eintrittsdüse 7 ist mit gegenüber liegenden Öffnungen 9 versehen. Die gemeinsame Position des Stoßbands 5 und der Austrittsdüse 7 wird durch den Bolzen 10, welcher durch die Positionierungsöffnung 6 und einer der gegenüber liegenden Öffnungen 9 in der Austrittsdüse 7 führt. Zwischen dem Stoßband 5 und der Austrittsdüse 7 befindet sich ein Fixateur 11 gebildet zum Beispiel aus der Schelle 12 mit Schraube 13.

Die geeignete gemeinsame Position zwischen dem Stoßband 5 und der Austrittsdüse 7 wird durch die Auswahl der geeigneten gegenüber liegenden Öffnung 9 für bestimmte Fahrwerksausführungen und bestimmte Betriebsbedingungen eingestellt. Wenn es zu einer Änderung, zum Beispiel bei einem Austausch der Bremsen hin zu einer anderen Größe, einer anderen Höheneinstellung des Fahrwerks oder laut Fahrbahnzustand kommt, wird der Fixateur 11 gelöst und anschließend wird der Bolzen 10 herausgezogen, sodass es möglich wird die geforderte Position zwischen Stoßband 5 und Austrittsdüse 7 aufgrund der anderen Stellung der Positionierungsöffnung 6 und einer der gegenüber liegenden Öffnungen 9 einzustellen. Anschließend wird in die Öffnungen 6, 9 der Bolzen 10 gesteckt. Die so eingestellte gemeinsame Position wird durch das Anziehen der Schraube 13 an der Schelle 12 des Fixateurs 11. Durch die aufgeführte Einstellung wird die Ausrichtung des austretenden Luftstroms aus dem variablen Kühlungskanal 1 zur geforderten Stelle im Radkasten der Fahrzeugkarosserie sichergestellt.

### Bezugszeichenliste

- 1: Variabler Kühlungskanal
- 2: Konfusor
- 3: Eintrittsöffnung
- 4: Stoßfänger
- 5: Stoßband
- 6: Positionierungsöffnung
- 7: Austrittsdüse
- 8: Austrittssöffnung
- 9: Gegenüberliegende Öffnung
- 10: Bolzen
- 11: Fixateur
- 12: Schelle
- 13: Schraube

## Patentansprüche

1. Ein variabler Kanal (1), welcher durch einen Konfusor (2) anbindend an ein Stoßband (5), angrenzend an eine Eintrittsöffnung (3) im vorderen Stoßfänger (4) und einer Austrittsdüse (7) mit Austrittsöffnung (8) gebildet ist **dadurch gekennzeichnet, dass** die Austrittsdüse (7) drehbar / einstellbar auf dem Stoßband (5) angebracht ist.

2. Ein variabler Kühlungskanal (1) nach Anspruch 1 **dadurch gekennzeichnet, dass** das Stoßband (5) mit einer Positionierungsöffnung (6) und der Austrittsdüse (7) wenigstens mit einer gegenüber liegenden Öffnung (9) versehen ist.

3. Ein variabler Kühlungskanal (1) nach Anspruch 1 **dadurch gekennzeichnet, dass** die Austrittsdüse mit einem Fixateur (11) gebildet durch eine Schelle (12) und eine Schraube (13) versehen ist.

4. Ein variabler Kühlungskanal (1) nach Anspruch 1 **dadurch gekennzeichnet, dass** durch die Positionierungsöffnung (6) in der Eintrittsdüse (7) und durch die korrespondierende gegenüber liegende Öffnung (9) im Stoßband (5) ein Bolzen (10) verläuft.
